# EUROPÄISCHE PATENTANMELDUNG

(11) **EP 2 450 561 A1**
(43) Veröffentlichungstag der Anmeldung: **09.05.2012**
(21) Anmeldenummer: 10846244.1
(22) Anmeldetag: 01.06.2010
(51) Int. Cl.: F03B 13/00, F03B 17/06

(54) **VERFAHREN ZUR PRODUKTION VON HYDROELEKTRISCHEM STROM**

(30) Priorität: 16.02.2010 RU 2010105597
(71) Anmelder: Mironov, Dmitri Victorovich, Tyumen 625006 (RU); Mironov, Victor Vladimirovich, Tyumen 625000 (RU)
(72) Erfinder: Mironov, Dmitri Victorovich, Tyumen 625006 (RU); Mironov, Victor Vladimirovich, Tyumen 625000 (RU)
(74) Vertreter: Jeck, Anton
(86) Internationale Anmeldenummer: PCT/RU2010/000218
(87) Internationale Veröffentlichungsnummer: WO 2011/102750

(57) **Zusammenfassung**

Die Erfindung bezieht sich auf die Wasserkraftlehre und zwar auf ein Verfahren zur Nutzung der Wasserschätze der Flachlandflüsse zur elektrischen Stromerzeugung. Das Verfahren zur elektrischen Wasserkraftgewinnung beinhaltet eine Ingangsetzung der Wicklungen eines isolierten leitfähigen Drahts in Bezug auf Magnete unter der Einwirkung der Wasserstromenergie in einer Wasserleitung und eine Abnahme der Spannung an diesen Wicklungen. Der Wasserdruck in der Wasserleitung wird in einem pulsierenden Zustand mit Hilfe eines periodisch ausgelösten Wasserstoßes verändert. Es wird **dadurch** eine radiale Pulsation von einem Teil der Wasserleitungswandungen hervorgerufen. Die auf den pulsierenden Partien der Wasserleitungswandungen angebauten Wicklungen des isolierten Drahts sowie die an den unbeweglichen Partien der Wasserleitungswandungen montierten Magnete werden in radiale Hin- und Herbewegung zueinander gebracht. Dabei wird in den Wicklungen des isolierten leitfähigen Drahts der elektrische Strom erzeugt.

## Beschreibung

Die Erfindung betrifft ein Verfahren zur elektrischen Wasserkraftgewinnung nach dem Oberbegriff des Anspruchs 1.

Die Erfindung bezieht sich auf die Wasserkraftlehre und zwar auf ein Verfahren zur Nutzung von Wasserschätzen zur elektrischen Energiegewinnung.

So gut wie alle bekannten Verfahren zur elektrischen Wasserkraftgewinnung beruhen darauf, dass die Wasserströmung über eine Wasserleitung einer Turbine zugeführt wird. Die Turbine besteht üblicherweise aus mit einem Läufer gekoppelten Schaufeln und aus einer Ständerwicklung. Der rotierende Läufer verursacht die Veränderung eines magnetischen Felds in der Ständerwicklung, welche aus einem isolierten, elektrisch leitfähigen Werkstoff ausgebildet ist. Dabei wird darin ein elektrischer Strom induziert. (z. B. Patent RU 2157870, E02B 9/00).

Der nächstkommende Stand der Technik gegenüber der Erfindung (Prototyp) mit der größten Anzahl ähnlicher Merkmale und dem dabei erreichten Effekt ist ein Verfahren, welches vorsieht, einem Maschinenaggregat Wasser eines Wasserkraftwerks unter Druck zuzuführen [Fachlexikon für Kinder, Band 5, Technik und Produktion, M., Prosveschschenie, 1965, S. 171-174]. Die Turbine des Aggregats treibt einen Läufer eines Wasserkraftgenerators an. Auf dem Wasserkraftgenerator sind Pole starker Elektromagnete befestigt, deren Feld auf die im Ständer eingebaute und aus isolierten Leitern bestehende Wicklung einwirkt. Damit ist eine elektrische Wasserkraftgewinnung generiert.

Der Mangel des Prototyps ist, dass die Energie des fließenden Wassers unter Einsatz konventioneller Wasserturbinen von einem Wasserströmungsquerschnitt von der Wasserleitung mit der darin eingebauten Turbine abgenommen wird. Die Strömungsleistung im Querschnitt hängt von dem Wasserdruck und dem Wasserdurchfluss darin ab. Der Wasserdruck und der Wasserdurchfluss sind ihrerseits durch die Höhe der Stauanlage und die in der Wasserleitung vorhandenen Wasserwiderstände begrenzt. Der Bau von Hochstauanlagen zwecks Vergrößerung der mechanischen Leistungsabnahme von der Wasserströmung an der Turbinenstandstelle ist teuer und fügt darüber hinaus der Umwelt und den anliegenden Geländen einen beachtlichen Schaden zu.

Es ist Aufgabe der Erfindung, ein einfaches Verfahren zur Gewinnung einer großen Menge elektrischer Wasserkraft bei minimalem Schaden für die Umwelt und das anliegende Gelände zu entwickeln.

Die gestellte Aufgabe wird durch die Merkmale des Anspruchs 1 gelöst.

Das Verfahren zur elektrischen Wasserkraftgewinnung umfasst eine Ingangsetzung von Magneten und Wicklungen einer isolierten stromführenden Leitung zueinander unter Einwirkung einer über eine Wasserleitung zugeführten Wasserstromenergie und einen Spannungsabgriff an den Wicklungen.

Das Verfahren wird durch folgende Merkmale gekennzeichnet:
Der Wasserdruck in der Wasserleitung wird im pulsierenden Zustand geändert. Damit wird die Pulsation von einem Teil der Wandungen der Wasserleitung durch einen periodisch auslösenden Wasserstoß hervorgerufen. Dadurch werden die an den unbeweglichen Partien der Wasserleitungswandungen montierten Magnete sowie die an den pulsierenden Partien der Wasserleitungswandungen angebauten Wicklungen des isolierten Drahts in eine radiale Hin- und Herbewegung zueinander versetzt. Auf diese Weise wirkt das Feld der Magnete auf die Wicklungen ein.

Nach dem erfindungsgemäßen Verfahren wird die Bewegungsenergie der gesamten in der Wasserleitung mit ursprünglicher Geschwindigkeit (vor der Auslösung des Wasserstoßes in der Wasserleitung) fließenden Wassermenge zuerst in eine Lageenergie der elastischen Formänderung des Wassers und der Wasserleitungswandungen beim Absperren des Wasserleitungsquerschnitts umgewandelt. Unter Wirkung dieser Lageenergie wird eine mechanische Arbeit ausgeführt, um die Magnete und die Wicklungen aus isoliertem Draht zueinander radial zu bewegen. Die Magnete und die Wicklungen des isolierten Drahts sind gleichmäßig über die gesamte Länge der Wasserleitung jeweils auf den unbeweglichen und beweglichen Partien der Wasserleitung montiert. Diese radiale Versetzung in Bezug zueinander führt zur Erzeugung eines elektrischen Stroms in den Wicklungen des isolierten Drahts.

Das Verfahren zur Wasserkraftgewinnung wird wie folgt ausgeführt:
Die Krafthydraulikanlagen werden in Form von Rohrleitungen (Wasserleitungen) gebaut. Ein Teil ihrer Wandungen kann unter der Einwirkung eines variablen Wasserdrucks in den Wasserleitungen radial verschoben werden. Die Wasserdruckänderungen sind dabei durch den periodisch auslösbaren Wasserstoß bedingt. Die Hochenergiemagnete mit Magnetkörpern werden an den unbeweglichen Partien der Rohrleitungswandungen befestigt. Ringwicklungen aus isoliertem Draht werden in die Luftspalte zwischen den Magnetkörpern eingebaut. Die Ringwicklungen sind dabei mit den beweglichen Teilen der Rohrleitungswandungen (Wasserleitungen) gekoppelt. Der Wasserstoß wird in den Rohrleitungen mit Hilfe von hydraulischen Widdern (Stoßhebern) ausgelöst [Hydraulik. N.N. Kremenetsky, D.V. Sterenlicht, V.M. Alyshev, L.V. Yakovleva, M., Energia, 1973, S. 215-217]. Der durch den hydraulischen Widder verursachte Wasserstoß leitet Druckschwankungen in der Rohrleitung und radiale Verschiebungen der Ringwicklungen in Bezug auf die Magnete mit den Magnetkörpern ein. Dadurch wird elektromotorische Kraft in den Ringwicklungen induziert.

Dies kann an folgendem Beispiel eingehend betrachtet werden:
Die ursprüngliche Geschwindigkeit der Wasserbewegung in einer Stahlumleitung eines Wasserkraftwerks mit einem Innendurchmesser von 1,4 m beträgt 5 m/Sek. Die Gefällehöhe zwischen Anfang und Ende der Umleitung ist 5 m. Davon fällt ein Meter auf die Höhe der Stauanlage ab, welche erforderlich ist, um eine zeitliche Konstanz der Wasserbewegungskenndaten in der Umleitung oder ihre Regelung aufrechtzuerhalten. Die Umleitung ist 138 m lang. Die Durchflusszahl des Rohrleitungssystems beträgt bei vorgegebenen Parametern 0,5. Die Durchflusszahl berücksichtigt Energieverluste (Druckverluste) an Wassergegenständen in der Rohrleitung und insbesondere Reibungsverluste entlang der Länge der Rohrleitung während der Wasserbewegung durch die Rohrleitung, dies bei lokalen Widerständen, die im Rohrleitungssystem (am Eintritt in die Rohrleitung, in der Krümmung der Rohrleitung usw.) vorhanden sind. Die Umleitung ist gleichzeitig ein Hydraulikaggregat für die Ausführung des neuen Verfahrens zur elektrischen Wasserkraftgewinnung. Die Fläche der beweglichen Partie der mit den Wicklungen des isolierten Drahts gekoppelten Rohrleitungswandungen pro Längeneinheit der Rohrleitung beträgt 1,54 m².

Sperrt ein Ventil eines bekannten hydraulischen Widders den Rohrleitungsquerschnitt am Ende der Rohrleitung schnell ab, so entsteht darin ein direkter Wasserstoß mit einem berechneten spezifischen Stoßdruck von 0,69 MPa. Dieser Wasserstoß läuft vom Absperrquerschnitt der Rohrleitung zu ihrer Anfangsstelle mit einer Ausbreitungsgeschwindigkeit der Druckwelle hin. Im betrachteten Beispiel beträgt sie berechnungsgemäß 138 m/Sek. Das leitet aufeinander folgende radiale Verschiebungen der beweglichen Partien der mit Wicklungen des isolierten Drahts gekoppelten Rohrleitungswandungen um 5 cm zu den Magneten ein. Die Magnete sind an den unbeweglichen Teilen der Rohrleitungswandungen montiert. Der Stoßdruck leistet bei der aufeinander folgenden Radialverschiebung aller beweglichen Partien der Rohrleitungswandungen in der 138 m langen Strecke innerhalb einer Sekunde eine mechanische Arbeit. Es handelt sich dabei berechnungsgemäß um eine mechanische Leistung von 2,6 MW. Die innerhalb der ersten Sekunde nach Auslösung des Wasserstoßes geleistete mechanische Arbeit stimmt bei minimalen Energieverlusten praktisch mit der Bewegungsenergie der über die Rohrleitung fließenden Wassermenge überein. Die Rohrleitung hat dabei eine vorgegebene Länge, und das Wasser fließt mit ursprünglicher Geschwindigkeit. Danach wird der Betrieb des Hydraulikaggregats für eine Weile unterbrochen. Diese Pause ist erforderlich, um den neuen Wasserstoß in der Rohrleitung mit dem bekannten hydraulischen Widder wieder auszulösen. Der gesamte Vorgang wird wiederholt. Um die oben genannte mechanische Leistung ununterbrochen abgreifen zu können, müssen mehrere baugleiche Einrichtungen (hydraulische Widder) eingesetzt werden, die mit einer Zeitverschiebung betrieben werden.

Zum Vergleich: Ein konventionelles Wasserkraftwerk umfasst eine Umleitung mit ähnlicher Länge mit einer Wasserturbine. Die Wasserturbine wird am Ende der Umleitung aufgebaut und hat einen Rotationsstromerzeuger. Bei einem gleichen Höhengefälle von 5 m fällt 1 Meter auf die Höhe der Stauanlage ab. Bei gleicher (die Energieverluste während der Wasserbewegung in der Umleitung kennzeichnender) Durchflusszahl des Rohrleitungssystems wird eine effektive Druckhöhe vor der Turbine nur 1,9 m betragen. Die zeitlich ununterbrochen abgegriffene mechanische Leistung wird dabei max. 0,15 MW ausmachen, was 17,3-mal kleiner ist als die mechanische Leistung, welche unter Einsatz der Energie des Wasserstoßes in vier baugleichen mit Zeitverschiebung betriebenen Hydraulikaggregaten abgenommen wird. Die Errichtung von vier Umleitungen mit Wasserturbinen an ihren Enden wird die Gesamtleistung um das Vierfache steigern, wird jedoch die Abnahme der oben genannten mechanischen Leistung von 2,6 MW nicht sicherstellen. Darüber hinaus wird eine solche Ausgestaltung die vierfache Steigerung des Wasserdurchflusses verursachen, welcher für die Stromerzeugung verwendet wird, weil die Wasserturbinen ununterbrochen laufen. Werden die Turbinen in der Wasserströmung unmittelbar hinter der Stauanlage ohne Umleitung gebaut, so wird die abgegriffene mechanische Leistung im betrachteten Beispiel bei 1 m hoher Stauanlage noch geringer sein, denn die Druckhöhe vor der Turbine in diesem Fall ist noch kleiner als bei der Anwendung einer Umleitung.

Der Einsatz der erfindungsgemäßen Lösung im Vergleich zu allen bekannten Anlagen/Mitteln mit ähnlichem Bestimmungszweck stellt eine beachtlich höhere elektrische Wasserkraftgewinnung sicher, ohne dass massive Hochdruck-Stauanlagen errichtet werden müssen und der Umwelt ein beträchtlicher Schaden zugefügt wird.

## Patentansprüche

1. Verfahren zur elektrischen Wasserkraftgewinnung einschließlich einer Ingangsetzung von Wicklungen aus isoliertem stromführenden Draht in Bezug auf Magnete unter der Einwirkung einer über eine Wasserleitung zugeführte Wasserstromenergie und einer Spannungsabnahme an den Wicklungen,
**dadurch gekennzeichnet,**
**dass** der Wasserdruck in der Wasserleitung in einem pulsierenden Zustand mit Hilfe eines periodisch ausgelösten Wasserstoßes verändert wird, wodurch eine radiale Pulsation von einem Teil der Wasserleitungswandungen hervorgerufen wird,
**dass dadurch** die auf den pulsierenden Partien der Wasserleitungswandungen angebauten Wicklungen des isolierten Drahts sowie die an den unbeweglichen Partien der Wasserleitungswandungen montierten Magnete in radiale Hin- und Herbewegung zueinander gebracht werden und
**dass** dabei der elektrische Strom in den Wicklungen des isolierten leitfähigen Drahts erzeugt wird.
